# EUROPEAN PATENT APPLICATION

(11) **EP 4 583 328 A1**
(43) Date of publication of application: **09.07.2025**
(21) Application number: 23863001.6
(22) Date of filing: 28.08.2023
(51) Int. Cl.: H01R 35/04

(54) **ROTATIONAL CONNECTOR DEVICE AND ON-BOARD DEVICE**

(30) Priority: 07.09.2022 JP 2022142382
(71) Applicant: FURUKAWA ELECTRIC CO., LTD., Tokyo 100-8322 (JP); Furukawa Automotive Systems Inc., Inukami-gun, Shiga 522-0242 (JP); HONDA MOTOR CO., LTD., Minato-ku Tokyo 107-8556 (JP)
(72) Inventor: TAJIRI, Yoji, Inukami-gun, Shiga 522-0242 (JP); FUJITA, Miyu, Tokyo 107-8556 (JP); AOYAMA, Ikufumi, Tokyo 107-8556 (JP)
(74) Representative: Weickmann & Weickmann PartmbB
(86) International application number: PCT/JP2023/031017
(87) International publication number: WO 2024/053462

(57) **Abstract**

A rotary connector device (6) comprises a stator (10), a rotator (20), a holder attachment portion (70), and a cable holder (80). The holder attachment portion (70) includes a holder attachment hole (71). The cable holder (80) is detachably attached to the holder attachment hole (71) and holds a cable (8B) in a state where the harness connector (8A) is connected to the rotator-side connector (22) of the rotator (20). The cable holder (80) and the holder attachment portion (70) have an engagement structure.

## Description

### Technical Field

The technology disclosed in the present application relates to a rotary connector device and an in-vehicle apparatus.

### Background Art

Patent Literature 1 describes the rotary connector 1 electrically connecting an electric device provided to a steering wheel and an electric device provided to a vehicle body. The rotary connector 1 includes the rotor 2, the stator 3, the rotor-side connector portion 2B, the stator-side connector portion 3B, and the flexible printed circuit boards 4 and 5. The rotor-side connector portion 2B is provided to the rotor 2. The stator-side connector portion 3B is provided to the stator. The rotor-side lead block 7 provided in the rotor-side connector portion 2B and the stator-side lead block 9 provided in the stator-side connector portion 3B are electrically connected by the flexible printed circuit boards 4 and 5.

The connector portion of the external cable fits in the rotor-side connector portion 2B. In a state where the connector portion of the external cable fits in the rotor-side connector portion 2B, the terminal of the connector portion of the external cable contacts the terminal of the rotor-side lead block 7 provided in the rotor-side connector portion 2B. The external cable electrically connects, for example, the lead block 7 provided in the rotor-side connector portion 2B and the electric device provided to the steering wheel. The electric device provided to the steering wheel is electrically connected to the electric device provided to the vehicle body via the external cable and the flexible printed circuit boards 4 and 5.

### Citation List

### Patent Literature

Patent Literature 1: International publication WO2017/208544

### Summary of Invention

### Technical Problem

However, there are cases where the rotary connector 1 is attached to the vehicle body in a state where the rotational axis of the rotor 2 is misaligned from the rotational axis of the steering wheel. In such cases, the misalignment between the rotational axis of the rotor 2 and the rotational axis of the steering wheel causes relative movement between the rotor-side connector part 2B and the steering wheel along a plane perpendicular to the rotational axis while the rotor 2 and the steering wheel are rotating. This relative movement exerts forces in various directions through the external cable to the connector part of the external cable connected to the rotor-side connector part 2B, placing physical load on the coupling portion between the rotor-side connector part 2B and the connector portion of the external cable. As a result, the contact portion between the rotor-side connector part 2B and the connector part of the external cable can experience wear.

An object of the technology disclosed in the present application is to reduce or prevent wear of at least one of a rotator-side connector and a harness connector of a wire harness which is caused by misalignment between a rotational axis of a rotator and a rotational axis of a stator wheel.

### Solution to Problem

In accordance with a first aspect, a rotary connector device comprises a stator, a rotator, a holder attachment portion, and a cable holder. The rotator includes a rotator-side connector detachably connectable to a harness connector provided at an end of a wire harness cable. The rotator is rotatably provided about a rotational axis relative to the stator. The holder attachment portion is coupled to the rotator and includes a holder attachment hole. The cable holder is detachably attached to the holder attachment hole and holds the cable in a state where the harness connector is connected to the rotator-side connector. The holder attachment portion and the cable holder have an engagement structure.

With the rotary connector device according to the first aspect, since the cable is held by the cable holder provided to the rotator in a state where the harness connector is connected to the rotator-side connector, even if the rotational axis of the rotator is misaligned from the steering rotational axis of the steering wheel, the cable holder can reduce or prevent forces from being applied from the wire harness cable to the harness connector during the rotation of the rotator and the steering wheel. Thus, it is possible to reduce or prevent the relative movement between the rotator-side connector and the harness connector during the rotation of the rotator and the steering wheel even if the rotational axis of the rotator is misaligned from the steering rotational axis of the steering wheel. Accordingly, it is possible to reduce or prevent wear of at least one of the rotator-side connector and the harness connector that could be caused by the misalignment between the rotational axis and the steering rotational axis.

In accordance with a second aspect, the cable holder includes a recess. The holder attachment portion includes a protrusion. The protrusion is provided in the holder attachment hole and engages with the recess in a state where the cable holder is inserted in the holder attachment hole.

With the rotary connector device according to the second aspect, since the protrusion of the holder attachment portion engages with the recess in the state where the cable holder is inserted in the holder attachment hole, it is possible to attach the cable holder to the holder attachment hole or detached the cable holder from the holder attachment hole. Accordingly, assembleability and maintainability of the cable holder can be improved.

In accordance with a third aspect, in the rotary connector device according to the first or second aspect, the cable holder includes a release portion configured to release engagement between the recess and the protrusion based on a user operation.

With the rotary connector device according to the third aspect, the cable holder can be detached from the holder attachment hole by the user operation. Accordingly, the assembleability and maintainability of the cable holder can be reliably improved.

In accordance with a fourth aspect, in the rotary connector device according to any one of the first to third aspects, the holder attachment hole is at least partially provided radially outward relative to the rotator when viewed along the rotational axis.

With the rotary connector device according to the fourth aspect, the radially outward space of the rotator can be effectively utilized as a space for providing the holder attachment hole.

In accordance with a fifth aspect, in the rotary connector device according to any one of the first to fourth aspects, the holder attachment hole opens in an axial direction to enable the cable holder to be inserted in and removed from the holder attachment hole in the axial direction defined along the rotational axis.

With the rotary connector device according to the fifth aspect, it is possible to make it easy to insert or remove the cable holder. Accordingly, the assembleability and maintainability of the cable holder can be reliably improved.

In accordance with a sixth aspect, in the rotary connector device according to the fifth aspect, the rotator-side connector includes a connector attachment hole. The connector attachment hole opens in the axial direction to enable the harness connector to be inserted in and removed from the connector attachment hole in the axial direction.

With the rotary connector device according to the sixth aspect, it is possible to make it easier to insert or remove the cable holder. Accordingly, the assembleability and maintainability of the cable holder can be more reliably improved.

In accordance with a seventh aspect, the rotary connector device according to any one of the first to sixth aspects further comprises a coupling member coupling the cable holder to the cable.

With the rotary connector device according to the seventh aspect, the coupling member can reduce or prevent relative movement between the cable holder and the cable. Accordingly, it is possible to reduce or prevent wear of at least one of the rotator-side connector and the harness connector that could be caused by the misalignment between the rotational axis and the steering rotational axis.

In accordance with an eighth aspect, in the rotary connector device according to the seventh aspect, the coupling member includes at least two coupling bands coupling the cable holder to the cable.

With the rotary connector device according to the eighth aspect, the at least two coupling bands can reliably reduce or prevent the relative movement between the cable holder and the cable. For example, in a case where a single coupling band couples the cable holder to the wire harness cable, the cable is secured to the cable holder at a single securing point. Accordingly, in a case where force acts on the wire harness cable, a moment centered on the securing point acts on the cable, and potentially transmitting the force to the harness connector via the cable. On the other hand, in a case where the at least two coupling bands couple the cable holder to the cable, since the cable is secured to the cable holder at at least two securing points, a moment centered on the securing points is less likely to act on the cable, enabling the transmission of force to the harness connector via the cable to be reduced or prevented. Accordingly, it is possible to reduce or prevent wear of at least one of the rotator-side connector and the harness connector that could be caused by the misalignment between the rotational axis and the steering rotational axis.

In accordance with a ninth aspect, an in-vehicle apparatus comprises the rotary connector device according to any one of the first to eighth aspects and a wire harness. The wire harness includes a harness connector and a cable. The wire harness cable is arranged to curve in a region from the harness connector to the cable holder in a state where the harness connector is connected to the rotator-side connector.

With the in-vehicle apparatus according to the ninth aspect, since the in-vehicle apparatus comprises the rotary connector device according to any one of the first to eighth aspects, it is possible to reduce or prevent wear of at least one of the rotator-side connector and the harness connector that could be caused by the misalignment between the rotational axis and the steering rotational axis. Additionally, the assembleability and maintainability of the cable holder can be improved. For example, since the wire harness cable is arranged to curve in the region from the harness connector to the cable holder, even if there is a gap between the cable holder and the holder attachment hole, the curved cable can absorb relative movement between the cable holder and the holder attachment portion. Accordingly, the transmission of force to the harness connector via the cable can be reduced or prevented, and it is possible to reduce or prevent wear of at least one of the rotator-side connector and the harness connector that could be caused by the misalignment between the rotational axis and the steering rotational axis.

### Advantageous Effects of Invention

With the technology disclosed in the present application, it is possible to reduce or prevent wear of at least one of the terminal of the connector of the external cable and the terminal of the rotator-side connector that could be caused by misalignment between the steering rotational axis of the steering wheel and the rotational axis of the rotator.

### Brief Description of Drawings

FIG. 1 is a side elevational view of a rotary connector device in accordance with an embodiment.
FIG. 2 is a plan view of the rotary connector device shown in FIG. 1.
FIG. 3 is a cross-sectional view of the rotary connector device shown in FIG. 1.
FIG. 4 is a cross-sectional view of the rotary connector device taken along line IV-IV of FIG. 2.
FIG. 5 is a schematic diagram showing the impact of the misalignment between a rotational axis of a rotator shown in FIG. 1 and a steering axis on the coupling portion between the rotator-side connector and the harness connector of the wire harness.
FIG. 6 is a cross-sectional view showing the impact of the misalignment between the rotational axis of the rotator shown in FIG. 1 and the steering axis on the coupling portion between the rotator-side connector and the harness connector of the wire harness.
FIG. 7 is a partial top view of the rotary connector device shown in FIG. 1 (with the cable holder omitted).
FIG. 8 is a cross-sectional view of the rotary connector device taken along line VIII-VIII of FIG. 9.
FIG. 9 is a partial top view of the rotary connector device shown in FIG. 1.

### Description of Embodiments

Embodiments will be described below with reference to the drawings. In the drawings, the same reference signs indicate corresponding or identical configurations.

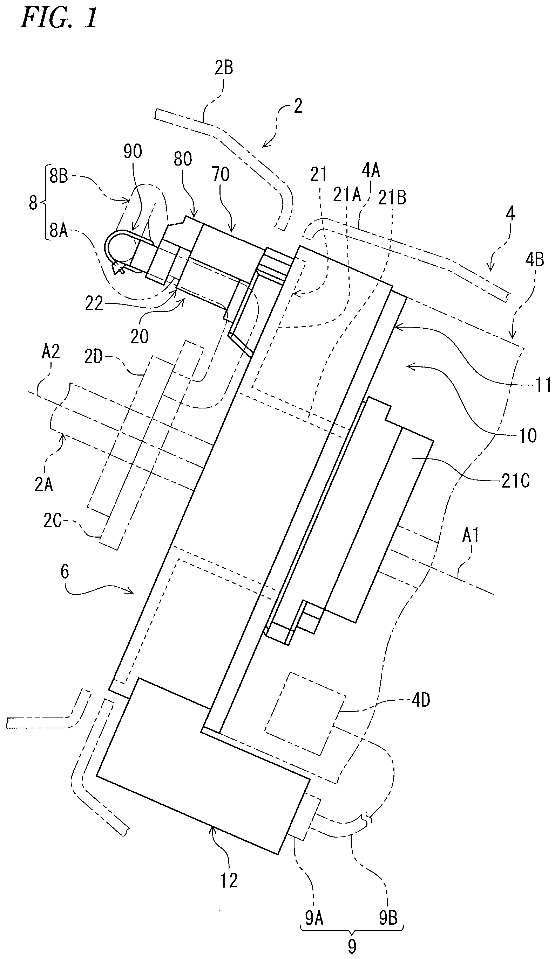

As shown in FIG. 1, an in-vehicle apparatus 1 comprises a rotary connector device 6 and a wire harness 8. The in-vehicle apparatus 1 further comprises a steering wheel 2. The wire harness 8 includes a harness connector 8A and a cable 8B. For instance, the cable 8B includes a plurality of electric cables. The plurality of electric cables is electrically connected to a plurality of connector terminals of the harness connector 8A. However, the cable 8B may include at least one electric cable.

The steering wheel 2 is coupled to a vehicle body 4 rotatably about a steering rotational axis A1. The steering wheel 2 includes, for example, a steering body 2A, a steering cover 2B, a support frame 2C, and a first electrical device 2D. The vehicle body 4 includes, for example, a column cover 4A, a steering column 4B, and a second electrical device 4D.

The steering body 2A is rotatably supported about the steering rotational axis A1 by the steering column 4B. The steering cover 2B and the support frame 2C are attached to the steering body 2A. The first electrical device 2D is attached to the support frame 2C. The steering body 2A, the steering cover 2B, the support frame 2C, and the first electrical device 2D are rotatable about the steering rotational axis A1 relative to the vehicle body 4. The column cover 4A and the second electrical device 4D are attached to the steering column 4B. The first electrical device 2D is electrically connected to the second electrical device 4D via the rotary connector device 6.

The rotary connector device 6 comprises a stator 10 and a rotator 20. The rotator 20 is rotatably provided about a rotational axis A2 relative to the stator 10. The stator 10 is configured to be coupled to the vehicle body 4 (e.g., the steering column 4B). The rotator 20 is configured to be coupled to the steering wheel 2 (e.g., the steering body 2A).

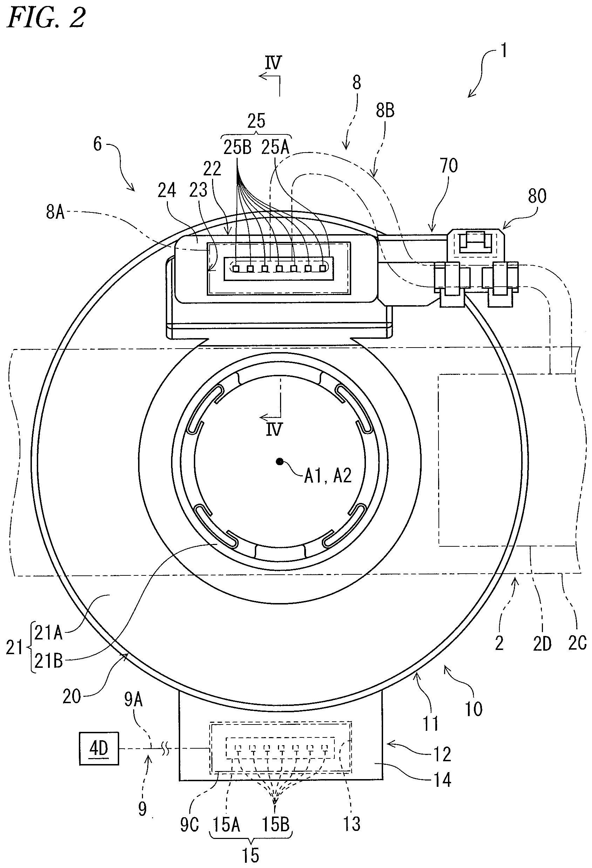

As shown in FIG. 2, the rotator 20 includes a rotator body 21 and a rotator-side connector 22. The rotator body 21 is rotatably provided about the rotational axis A2 relative to the stator 10.

As shown in FIG. 1, the rotator-side connector 22 protrudes from the rotator body 21 along the rotational axis A2. The rotator-side connector 22 is detachably connectable to a harness connector 8A provided at an end of the cable 8B of the wire harness 8.

The rotator body 21 includes a disc portion 21A, a cylindrical portion 21B, and a sleeve 21C. The cylindrical portion 21B extends along the rotational axis A2 from the inner periphery of the disc portion 21A. The sleeve 21C is attached to the end of the cylindrical portion 21B. The rotator-side connector 22 extends along the rotational axis A2 from the disc portion 21A.

The wire harness 8 is electrically connected to the first electrical device 2D. The cable 8B of the wire harness 8 is flexible. The rotator-side connector 22 is electrically connected to the first electrical device 2D via the wire harness 8. The rotator-side connector 22 may also be referred to as a first connector 22. The wire harness 8 may also be referred to as a first wire harness 8.

As shown in FIG. 2, the rotator-side connector 22 includes a connector attachment hole 23. The connector attachment hole 23 houses the harness connector 8A in a state where the harness connector 8A is connected to the rotator-side connector 22. The rotator-side connector 22 includes a connector case 24 including the connector attachment hole 23.

The rotator-side connector 22 includes a first lead block 25. The first lead block 25 is provided in the connector attachment hole 23. The first lead block 25 includes a lead block body 25A and a plurality of lead block terminals 25B. The lead block body 25A includes an insulating material. The plurality of lead block terminals 25B includes a conductive material. The plurality of lead block terminals 25B is partially provided in the lead block body 25A. In a state where the harness connector 8A is arranged in the connector attachment hole 23, the plurality of lead block terminals 25B of the first lead block 25 are contactable with the plurality of connector terminals of the harness connector 8A.

As shown in FIG. 1, the stator 10 includes a stator body 11 and a stator-side connector 12. The stator body 11 is secured to the steering column 4B of the vehicle body 4. The stator-side connector 12 protrudes from the stator body 11 along the rotational axis A2. The stator-side connector 12 is detachably connectable to a harness connector 9A provided at an end of the cable 9B of the wire harness 9.

The wire harness 9 is electrically connected to the second electrical device 4D. The cable 9B of the wire harness 9 is flexible. The stator-side connector 12 is electrically connected to the second electrical device 4D via the wire harness 9. The stator-side connector 12 may also be referred to as a second connector 12. The wire harness 9 may also be referred to as a second wire harness 9.

The stator-side connector 12 includes a connector housing space 13. The connector housing space 13 houses the harness connector 9A in a state where the harness connector 9A is connected to the stator-side connector 12. The stator-side connector 12 includes a connector case 14 including the connector housing space 13.

The stator-side connector 12 includes a second lead block 15. The second lead block 15 is provided in the connector housing space 13. The second lead block 15 includes a lead block body 15A and a plurality of lead block terminals 15B. The lead block body 15A includes an insulating material. The plurality of lead block terminals 15B includes a conductive material. The plurality of lead block terminals 15B is partially provided in the lead block body 15A. In a state where the harness connector 9A is arranged in the connector housing space 13, the plurality of lead block terminals 15B of the second lead block 15 is contactable with the plurality of connector terminals of the harness connector 9A.

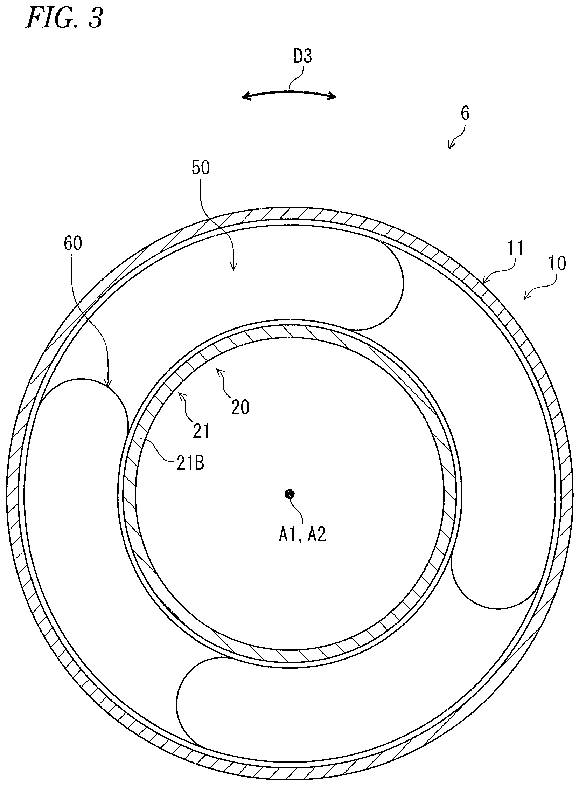

As shown in FIG. 3, the stator 10 and the rotator 20 form, between the stator 10 and the rotator 20, a cable housing space 50 provided to surround the rotational axis A2. The cable housing space 50 extends in a circumferential direction D3 and has an annular shape.

The rotary connector device 6 comprises an electrical cable 60. The electrical cable 60 is arranged in the cable housing space 50. The electrical cable 60 electrically connects the rotator-side connector 22 (see FIG. 2) and the stator-side connector 12 (see FIG. 2). The electrical cable 60 electrically connects the first lead block 25 (see FIG. 2) to the second lead block 15 (see FIG. 2). The electrical cable 60 includes a plurality of conductors. The plurality of conductors of the electrical cable 60 is connected to the plurality of lead block terminals 25B of the first lead block 25, respectively, and is connected to the plurality of lead block terminals 15B of the second lead block 15, respectively. The electrical cable 60 is flexible and, for example, has a flat shape. The electrical cable 60 may also be referred to as a flexible flat cable 60.

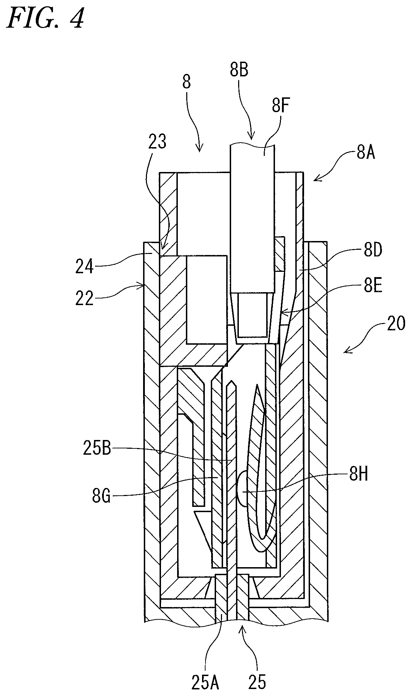

As shown in FIG. 4, the harness connector 8A includes a harness connector case 8D and a plurality of connector terminals 8E (one of the plurality of connector terminals 8E is shown in FIG. 4). The plurality of connector terminals 8E is arranged in positions corresponding to the plurality of lead block terminals 25B (see FIG. 2).

The cable 8B includes a plurality of cables 8F. The plurality of connector terminals 8E is electrically connected to the plurality of cables 8F. The plurality of connector terminals 8E is provided in the harness connector case 8D and is attached to the harness connector case 8D.

Each of the plurality of connector terminals 8E includes a bead 8G and a dimple 8H. The lead block terminal 25B of the first lead block 25 is sandwiched between the bead 8G and the dimple 8H of the connector terminals 8E in the state where the harness connector 8A is connected to the rotator-side connector 22. Thus, the plurality of lead block terminals 25B of the first lead block 25 is in contact with the plurality of connector terminals 8E of the harness connector 8A, respectively.

As shown in FIG. 1, it is preferable to attach the rotary connector device 6 to the vehicle body 4 such that the rotational axis A2 of the rotator 20 aligns with the steering rotational axis A1.

Due to manufacturing errors and/or mounting errors of the parts, however, there may be instances where the rotary connector device 6 is attached to the vehicle body 4 in a state where the rotational axis A2 of the rotator 20 is misaligned from the steering rotational axis A1. Due to the misalignment between the rotational axis A2 of the rotator 20 and the steering rotational axis A1, physical load can be placed on the coupling portion between the rotator-side connector 22 and the harness connector 8A during the rotation of the steering body 2A and the rotator 20, which may result in wear at the contact portion between the lead block terminal 25B and the connector terminal 8E.

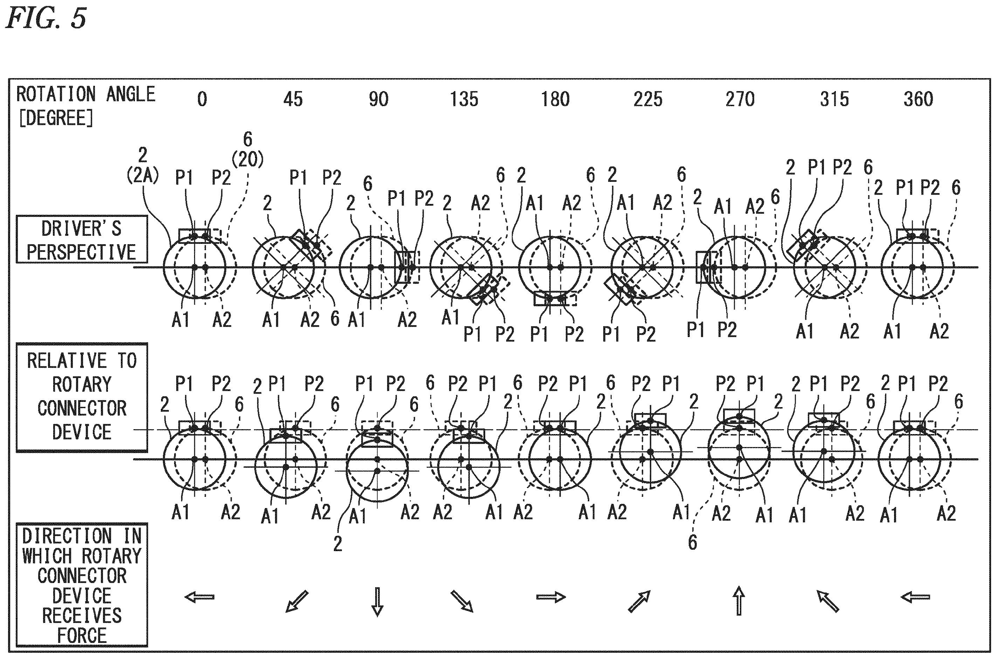

Here, using FIG. 5, the impact of the misalignment between the rotational axis A2 of the rotator 20 and the steering rotational axis A1 on the coupling portion between the rotator-side connector 22 and the harness connector 8A will be explained. The top section of FIG. 5 shows an example of the movement of the rotary connector device 6 and the steering wheel 2 from the driver's perspective. The middle section of FIG. 5 illustrates an example of the movement of the steering wheel 2 relative to the rotary connector device 6. The bottom section of FIG. 5 shows an example of the force acting from the cable 8B on the harness connector 8A connected to the rotator-side connector 22. The center point P2 of the rotator-side connector 22 is set as the reference point P1 in a case where the rotational axis A2 aligns with the steering rotational axis A1.

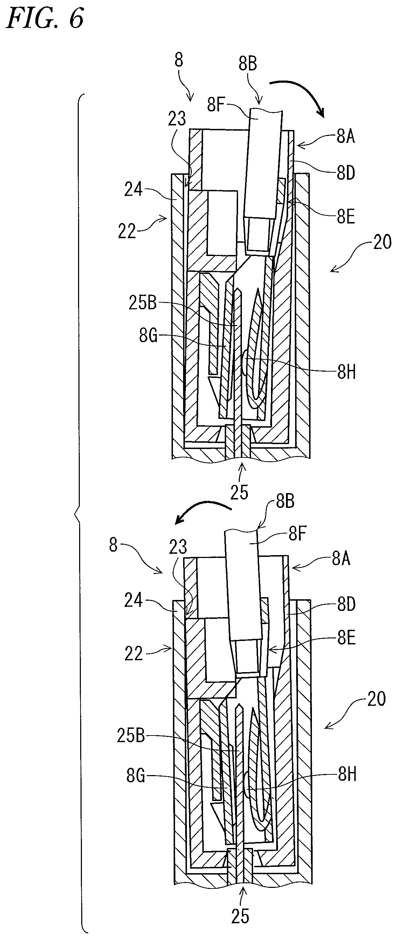

As shown in FIG. 5, in a case where the rotational axis A2 of the rotator 20 is misaligned from the steering rotational axis A1, the center point P2 of the rotator-side connector 22 is also misaligned from the reference point P1. When the steering body 2A and the rotator 20 rotate in this state, the center point P2 moves in various directions relative to the reference point P1. As a result, as shown in FIG. 6, when the steering body 2A and the rotator 20 rotate, forces are transmitted in various directions through the cable 8B to the harness connector 8A connected to the rotator-side connector 22, causing the harness connector 8A to move within the connector attachment hole 23 of the rotator-side connector 22. Consequently, the lead block terminal 25B of the first lead block 25 and the connector terminal 8E of the harness connector 8A rub against each other, leading to wear of at least one of the lead block terminal 25B and the connector terminal 8E.

Thus, as shown in FIG. 2, the rotary connector device 6 comprises a holder attachment portion 70 and a cable holder 80. The cable holder 80 is detachably attached to the holder attachment portion 70. The cable holder 80 holds the cable 8B in a state where the harness connector 8A is connected to the rotator-side connector 22.

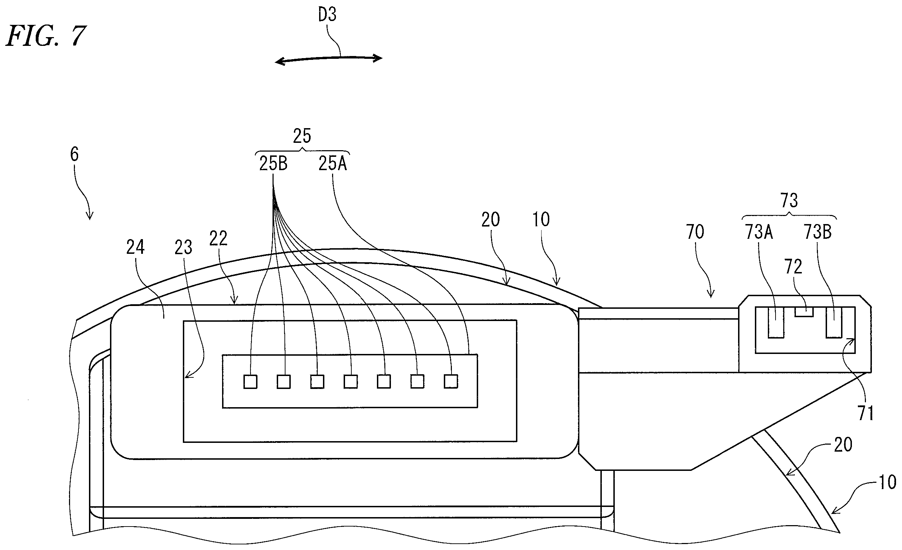

As shown in FIG. 7, the holder attachment portion 70 is coupled to the rotator 20 and includes a holder attachment hole 71. In the present embodiment, the holder attachment portion 70 is a separate member from the rotator 20 and is secured to the rotator 20. The holder attachment portion 70 is a separate member from the rotator-side connector 22 and is secured to the rotator-side connector 22. However, the holder attachment portion 70 may be integrally provided with the rotator 20 as a one-piece, unitary member. The holder attachment portion 70 may be integrally provided with the rotator-side connector 22 as a one-piece, unitary member.

The holder attachment hole 71 is at least partially provided radially outward relative to the rotator 20 when viewed along the rotational axis A2. The holder attachment hole 71 is at least partially provided radially outward relative to the rotator-side connector 22 when viewed along the rotational axis A2. The holder attachment hole 71 is at least partially provided radially outward relative to the connector attachment hole 23 when viewed along the rotational axis A2.

In the present embodiment, the holder attachment hole 71 is entirely provided radially outward relative to the rotator 20 when viewed along the rotational axis A2. The holder attachment hole 71 is entirely provided radially outward relative to the rotator-side connector 22 when viewed along the rotational axis A2. The holder attachment hole 71 is entirely provided radially outward relative to the connector attachment hole 23 when viewed along the rotational axis A2. However, the holder attachment hole 71 may be partially provided radially outward relative to the rotator 20 when viewed along the rotational axis A2. The holder attachment hole 71 may be partially provided radially outward relative to the rotator-side connector 22 when viewed along the rotational axis A2. The holder attachment hole 71 may be partially provided radially outward relative to the connector attachment hole 23 when viewed along the rotational axis A2. The holder attachment hole 71 may be partially provided radially inward of the outline of the rotator 20 when viewed along the rotational axis A2.

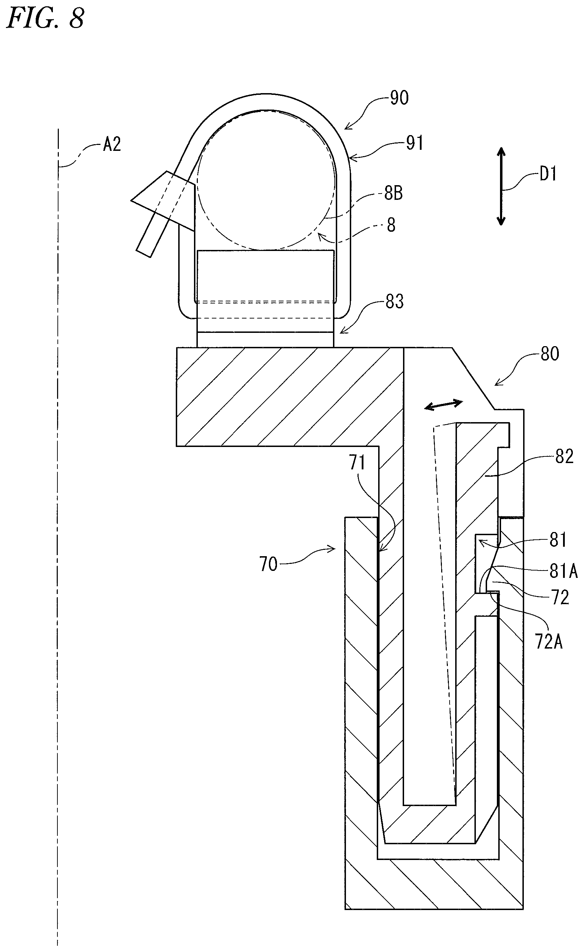

As shown in FIG. 8, the cable holder 80 is detachably attached to the holder attachment hole 71. The holder attachment hole 71 opens in the axial direction D1 to enable the cable holder 80 to be inserted in and removed from the holder attachment hole 71 in the axial direction D1 defined along the rotational axis A2. As shown in FIG. 4, the connector attachment hole 23 opens in the axial direction D1 to enable the harness connector 8A to be inserted in and removed from the holder attachment hole 71 in the axial direction D1.

The cable holder 80 and the holder attachment portion 70 have an engagement structure. As shown in FIG. 8, the cable holder 80 includes a recess 81. The holder attachment portion 70 includes a protrusion 72 provided in the holder attachment hole 71. The protrusion 72 engages with the recess 81 in a state where the cable holder 80 is inserted in the holder attachment hole 71. The protrusion 72 is at least partially arranged in the recess 81 in the state where the cable holder 80 is inserted in the holder attachment hole 71.

The protrusion 72 includes a first contact surface 72A. The recess 81 includes a second contact surface 81A. The first contact surface 72A of the protrusion 72 is contactable with the second contact surface 81A of the recess 81 in the state where the cable holder 80 is inserted in the holder attachment hole 71. The first contact surface 72A and the second contact surface 81A are perpendicular to the axial direction D1.

The cable holder 80 includes a release portion 82 configured to release engagement between the recess 81 and the protrusion 72 based on a user operation. The release portion 82 is elastically deformable in response to the user operation. The release portion 82 is elastically deformable such that the position of the recess 81 is changed relative to the protrusion 72 in response to the user operation. Pressing the release portion 82 by the user to elastically deform the release portion 82 disengages the engagement between the recess 81 and the protrusion 72, enabling the cable holder 80 to be removed from the holder attachment portion 70. Additionally, when the cable holder 80 is inserted into the holder attachment hole 71, the release portion 82 is elastically deformed, enabling the cable holder 80 to be inserted in the holder attachment hole 71 to a position in which the protrusion 72 engages with the recess 81.

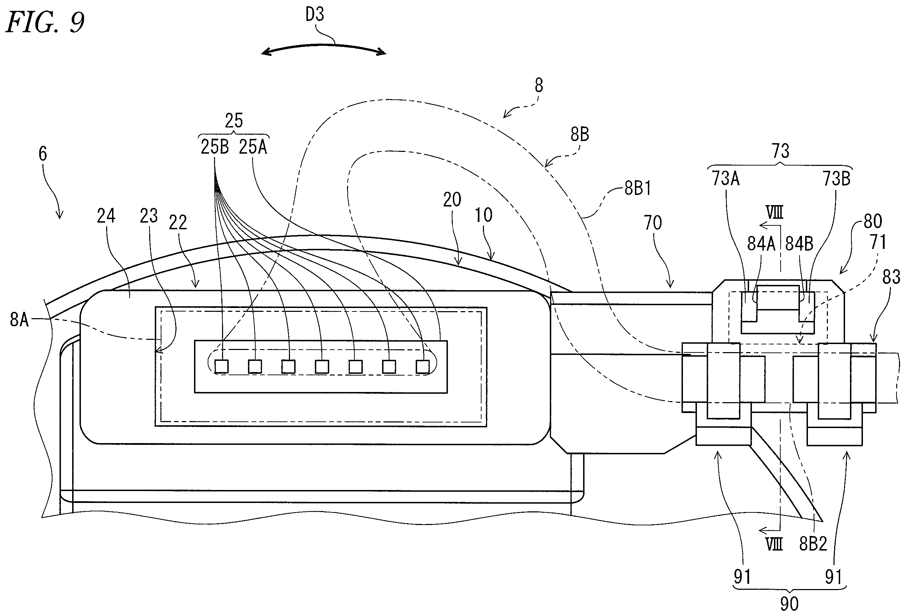

As shown in FIG. 9, the rotary connector device 6 further comprises a coupling member 90 coupling the cable holder 80 to the cable 8B. The coupling member 90 includes at least two coupling bands 91 coupling the cable holder 80 to the cable 8B. The coupling band 91 may include a zip tie. The cable holder 80 includes a coupling portion 83. The coupling portion 83 is coupled to the cable 8B by the coupling member 90. The coupling portion 83 is coupled to the cable 8B by the coupling band 91.

The cable 8B of the wire harness 8 is arranged to curve in a region from the harness connector 8A to the cable holder 80 in the state where the harness connector 8A is connected to the rotator-side connector 22. For instance, as viewed along the rotational axis A2, the cable 8B of the wire harness 8 is arranged to curve in the region from the harness connector 8A to the cable holder 80 in the state where the harness connector 8A is connected to the rotator-side connector 22. However, the direction in which the cable 8B curves is not limited to the illustrated direction.

The cable 8B of the wire harness 8 includes a curved portion 8B1 and a secured portion 8B2. The curved portion 8B1 is electrically connected to the harness connector 8A and is provided between the harness connector 8A and the secured portion 8B2. The secured portion 8B2 is secured to the coupling portion 83 of the cable holder 80 by the coupling member 90.

As shown in FIG. 9, the holder attachment portion 70 includes a holder holding portion 73. The holder holding portion 73 is contactable with the cable holder 80 to hold the cable holder 80 in a state where the cable holder 80 is inserted in the holder attachment hole 71. The holder holding portion 73 includes holding portions 73A and 73B.

The cable holder 80 includes holding grooves 84A and 84B. The holding portion 73A is provided in the holding groove 84A in the state where the cable holder 80 is inserted in the holder attachment hole 71. The holding portion 73B is provided in the holding groove 84B in the state where the cable holder 80 is inserted in the holder attachment hole 71.

As described above, the rotary connector device 6 comprises the stator 10, the rotator 20, the holder attachment portion 70, and the cable holder 80. The rotator 20 includes the rotator-side connector 22 detachably connectable to the harness connector 8A provided at the end of the cable 8B of the wire harness 8. The rotator 20 is rotatably provided about the rotational axis A2 relative to the stator 10. The holder attachment portion 70 is coupled to the rotator 20 and includes the holder attachment hole 71. The cable holder 80 is detachably attached to the holder attachment hole 71 and holds the cable 8B in the state where the harness connector 8A is connected to the rotator-side connector 22. The cable holder 80 includes the recess 81. The holder attachment portion 70 includes the protrusion 72. The protrusion 72 is provided in the holder attachment hole 71 and engages with the recess 81 in the state where the cable holder 80 is inserted in the holder attachment hole 71.

With the rotary connector device 6, since the cable 8B is held by the cable holder 80 provided to the rotator 20 in the state where the harness connector 8A is connected to the rotator-side connector 22, even if the rotational axis A2 of the rotator 20 is misaligned from the steering rotational axis A1 of the steering wheel 2, the cable holder 80 reduces or prevents forces applied from the cable 8B of the wire harness 8 to the harness connector 8A during the rotation of the rotator 20 and the steering wheel 2. Thus, it is possible to reduce or prevent the relative movement between the rotator-side connector 22 and the harness connector 8A during the rotation of the rotator 20 and the steering wheel 2 even if the rotational axis A2 of the rotator 20 is misaligned from the steering rotational axis A1. Accordingly, it is possible to reduce or prevent wear of at least one of the rotator-side connector 22 and the harness connector 8A that could be caused by the misalignment between the rotational axis A2 and the steering rotational axis A1.

Since the protrusion 72 of the holder attachment portion 70 engages with the recess 81 in the state where the cable holder 80 is inserted in the holder attachment hole 71, the cable holder 80 can be attached to or detached from the holder attachment hole 71. Thus, the assembleability and maintainability of the cable holder 80 can be improved.

In the present application, the term "comprise" and its derivatives are open-ended terms used to describe the existence of components and do not exclude the presence of other components not described. This also applies to the terms "have," "include," and their derivatives.

In the present application, ordinal terms such as "first" and "second" are merely used to identify configurations and do not have other meanings, such as implying a specific order. For example, the existence of a "first element" does not necessarily imply the existence of a "second element," nor does the existence of a "second element" necessarily imply the existence of a "first element."

Expressions such as "parallel," "perpendicular," and "coincide" in the present disclosure should not be interpreted strictly; rather, they include the meanings of "substantially parallel," "substantially perpendicular," and "substantially coincide," respectively. Similarly, other expressions regarding arrangement should not be interpreted strictly.

The expression "at least one of A and B" in the present disclosure encompasses, for example, (1) only A, (2) only B, and (3) both A and B. Similarly, the expression "at least one of A, B, and C" encompasses, for example, (1) only A, (2) only B, (3) only C, (4) both A and B, (5) both B and C, (6) both A and C, and (7) all of A, B, and C. The expression "at least one of A and B" in the present disclosure should not be interpreted as "at least one of A and at least one of B."

Obviously, numerous modifications and variations of the present invention are possible in light of the above teachings. It is therefore to be understood that within the scope of the appended claims, the invention may be practiced otherwise than as specifically described herein.

### Reference Signs List

1: Vehicle-mounted device
2: Steering wheel
4: Vehicle body
6: Rotary connector device
8: Wire harness
8A: Harness connector
8B: Cable
10: Stator
20: Rotator
21: Rotator body
22: Rotator-side connector
23: Connector attachment hole
24: Connector case
25: First lead block
50: Cable housing space
60: Electric cable
70: Holder attachment portion
71: Holder attachment hole
72: Protrusion
73: Holder holding portion
80: Cable holder
81: Recess
82: Release portion
83: Connection portion
90: Connecting member
91: Connection band
A1: Steering rotational axis
A2: Rotational axis
D1: Axial direction
D3: Circumferential direction

## Claims

1. A rotary connector device comprising:
a stator;
a rotator including a rotator-side connector detachably connectable to a harness connector provided at an end of a cable of a wire harness, the rotator being rotatably provided about a rotational axis relative to the stator;
a holder attachment portion coupled to the rotator and including a holder attachment hole; and
a cable holder detachably attached to the holder attachment hole, the cable holder holding the cable in a state where the harness connector is connected to the rotator-side connector,
the holder attachment portion and the cable holder having an engagement structure.

2. The rotary connector device according to claim 1, wherein
the cable holder includes a recess, and
the holder attachment portion includes a protrusion provided in the holder attachment hole, the protrusion engaging with the recess in a state where the cable holder is inserted in the holder attachment hole.

3. The rotary connector device according to claim 1, wherein
the cable holder includes a release portion configured to release engagement between the recess and the protrusion based on a user operation.

4. The rotary connector device according to claim 1, wherein
the holder attachment hole is at least partially provided radially outward relative to the rotator when viewed along the rotational axis.

5. The rotary connector device according to claim 1, wherein
the holder attachment hole opens in an axial direction to enable the cable holder to be inserted in and removed from the holder attachment hole in the axial direction defined along the rotational axis.

6. The rotary connector device according to claim 5, wherein
the rotator-side connector includes a connector attachment hole, and
the connector attachment hole opens in the axial direction to enable the harness connector to be inserted in and removed from the connector attachment hole in the axial direction.

7. The rotary connector device according to any one of claims 1 to 6, further comprising
a coupling member coupling the cable holder to the cable.

8. The rotary connector device according to claim 7, wherein
the coupling member includes at least two coupling bands coupling the cable holder to the cable.

9. An in-vehicle apparatus comprising:
the rotary connector device according to any one of claims 1 to 6; and
the wire harness including the harness connector and the cable,
the cable of the wire harness being arranged to curve in a region from the harness connector to the cable holder in a state where the harness connector is connected to the rotator-side connector.
